# EUROPÄISCHE PATENTSCHRIFT

(11) **EP 0 770 308 B1**
(45) Veröffentlichungstag und Bekanntmachung des Hinweises auf die Patenterteilung: **17.10.2001**
(21) Anmeldenummer: 96914991.3
(22) Anmeldetag: 26.04.1996
(51) Int. Cl.: H04N 9/31, H04N 7/01

(54) **VIDEOSYSTEM**
VIDEO SYSTEM
SYSTEME VIDEO

(30) Priorität: 11.05.1995 DE 19517356
(43) Veröffentlichungstag der Anmeldung: 02.05.1997
(73) Patentinhaber: Schneider Laser Technologies Aktiengesellschaft, 07548 Gera (DE)
(72) Erfinder: DETER, Christhard, D-07546 Gera (DE); HOFMANN, Gerhard, D-07549 Gera (DE); HUBRICH, Dieter, D-07549 Gera (DE)
(74) Vertreter: Geyer, Werner, Dr.-Ing.
(86) Internationale Anmeldenummer: EP9601750
(87) Internationale Veröffentlichungsnummer: WO9636183

(56) Entgegenhaltungen:
- WO-A-94/18802
- WO-A-95/03676
- DE-A- 4 015 020

## Beschreibung

Die Erfindung betrifft ein Videosystem zur Darstellung eines Videobildes, welches aus Bildpunkten aufgebaut ist, deren Farb- und/oder Helligkeitswerte sequentiell gemäß einem ersten Parametersatz mit vorgegebenen Parameterwerten für Zeilenzahl, Bildpunktzahl, Zeilenfrequenz und Bildfrequenz in einem Bildspeicher abspeicherbar sind, der gemäß einem zweiten Parametersatz mit anderen oder gleichen Parameterwerten zur Darstellung des abgespeicherten Videobildes mit einer Darstellungsvorrichtung auslesbar ist, welche eine gemäß den Farb- und/oder Helligkeitswerten der Bildpunkte steuerbare Lichtquelle zur Erzeugung eines Lichtbündels enthält, das über eine Optik auf einen Bildschirm projizierbar ist, wobei die Optik eine Rastereinrichtung aufweist, die einen Polygonspiegel zur zeilenmäßigen Ablenkung des Lichtbündels und einen Schwenkspiegel zu dessen bildmäßiger (vertikaler) Ablenkung umfaßt und mit der das Lichtbündel auf Rasterpunkte innerhalb eines zur Darstellung des Videobildes vorgegebenen Bildfeldes auf den Bildschirm lenkbar ist, und wobei eine Rastersteuerung zum Rastern des Lichtbündels gemäß dem zweiten Parametersatz vorgesehen ist, wobei das Videosystem eine Bildaufbereitungseinrichtung aufweist, die bei unterschiedlicher Bildpunkt- und/oder Zeilenzahl im ersten Parametersatz gegenüber dem zweiten Parametersatz die Bildpunkte gemäß dem zweiten Parametersatz aus den Helligkeits- und/oder Farbwerten des abgespeicherten Videobildes interpoliert.

Ein derartiges Videosystem ist aus der WO-A-9 418 802 bekannt. Bei dieser bekannten Einrichtung wird der Polygonspiegel mit verschiedenen Drehgeschwindigkeiten betrieben, welche an die Zeitfolge der einlaufenden Videotaten angepaßt werden. Dadurch ergibt sich die Notwendigkeit, daß der Bildverarbeitungsprozeß an die veränderliche Geschwindigkeit des Polygonspiegel-Antriebsmotors gekoppelt werden muß. Außerdem ist es verhältnismäßig aufwendig, die relativ träge Masse eines Polygonspiegels vorgegebenen Geschwindigkeitsänderungen anzupassen.

Weiterhin ist aus der DE 29 38 349 A1 ein Videosystem bekannt, welches eine Schaltungsanordnung zur Auflösungserhöhung und zur Vermeidung von Flimmern aufweist, bei der ein Bildspeicher mit einem Videobild beschrieben wird, das doppelt so schnell wieder ausgelesen wird.

Eine andere Anwendung von Bildspeichern ist aus der DE 41 39 842 A1 bekannt. Diese Druckschrift beschreibt ein Videosystem, mit dem das Videobild mit Hilfe von Lasern projiziert wird. Da die Lichtstärke der verwendeten Laser gering ist, wird das empfangene Videobild in einem Bildspeicher in Teilbereiche zerlegt, und diese Teilbereiche werden durch verschiedene Laserprojektoren abgebildet.

Solche Bildspeicher können beispielsweise auch verwendet werden, um von einer Norm in eine andere Norm umzusetzen, wobei die genannten Parametersätze durch die Norm der Eingangssignale und der Ausgangssignale bestimmt sind. Bezieht man die in Entwicklung befindlichen hochauflösenden Systeme mit ein, gibt es im wesentlichen folgende Normen: PAL, PAL PLUS, PAL 50 Hz Bildfrequenz, PAL 100 Hz Bildfrequenz, HDTV, HD-MAC, NTSC, MUSE.

Die Möglichkeit, Videobilder mit einer vorgegebenen Norm in einen Bildspeicher einzuspeichern und mit einer anderen Norm aus dem Bildspeicher auszulesen und darzustellen, ist im allgemeinen stark begrenzt, da TV-Systeme eine normspezifische angepaßte Bildröhre verwenden müssen und sich die Zeilenzahl sowie das Seitenverhältnis verschiedener Systeme zueinander unterscheiden können. Besonders beim Farbfernsehen wird die Beschränkung deutlich, da Bilder nur mit einer durch eine Lochmaske in der Bildröhre festgelegten Auflösung dargestellt werden können. Das gleiche gilt für LCD-Projektoren, bei denen die Dichte der Bildpunkte durch die Struktur der zu projizierenden LCD-Matrix vorgegeben ist.

Der Erfindung liegt die Aufgabe zugrunde, ein Videosystem der eingangs genannten Art so weiterzubilden, daß es eingangsseitig gemäß einem ersten Parametersatz entsprechend einer Norm empfangene Signale eines Videobildes nach einem anderen, zweiten Parametersatz zur Bilddarstellung, der durch dieselbe oder eine andere beliebige Norm bestimmt sein kann, auf besonders einfache und wirtschaftliche Art darstellt.

Zur Lösung dieser Aufgabe sieht die Erfindung vor, daß der Bildspeicher zum Auslesen des Videobildes mit Synchronisationsimpulsen für Zeilen- und/oder Bildbeginn aus der Rastersteuerung beaufschlagbar ist und daß die Synchronisationsimpulse aus von der Rastersteuerung erfaßten Positionen des Polygonspiegels und des Schwenkspiegels abgeleitet werden.

Es ist gemäß der Erfindung nur ein einziges Lichtbündel vorgesehen, so daß erfindungsgemäß eine Unterteilung des Videobildes in verschiedene Teilbilder, die unabhängig voneinander dargestellt werden, unterbleibt. Das erhöht wesentlich die Bildqualität ohne zusätzlichen Justieraufwand, da eventuelle Überlappungen bei der Darstellung von Teilbildern durch die Verwendung eines einzigen Lichtbündels, der das gesamte Bildfeld rastert, dann nicht auftreten.

Wenn das Lichtbündel aus der Lichtquelle sehr gut parallel ist, wie in dem vorher gegebenen Beispiel mit Lasern, kann der Bildschirm zur Darstellung auch beliebig weit von der Rastereinrichtung entfernt werden, ohne daß ein Schärfeverlust eintritt. Vorteilhafterweise kann man also mit dieser Technik allein durch Verstellung der Bildschirmentfernung unterschiedliche Bildgrößen erzeugen. Deshalb ergibt sich eine hohe Flexibilität für die darstellbare Bildgröße, und ein derartiges Videosystem kann sowohl für kleine als auch sehr große Bildgrößen ohne Erhöhung des technischen Aufwands gefertigt werden.

Die maximal mögliche Ablenkung eines Spiegels ist nicht begrenzt, so daß unterschiedliche Bildgrößen auf dem Bildschirm einfach erzeugbar sind, also variable Bildgrößen möglich sind, ohne daß der Bildschirm gegenüber der Rastereinrichtung verstellt wird.

Der bei der Erfindung eingesetzte Polygonspiegel, bei dem jede Seite des Polygons als Spiegel zum Rastern einer Zeile ausgebildet ist, gestattet ein Rastern mit großer Ablenkgeschwindigkeit. Wenn das Polygon sehr viele Seiten hat, sind sehr hohe Zeilenfrequenzen möglich, da sich die Zeilenfrequenz aus der Umdrehungszahl, geteilt durch die Anzahl der Polygonseiten, ergibt. Weiter gewährleistet der Polygonspiegel wegen seiner Trägheit einen sehr guten Gleichlauf, der für andere Ablenkungsarten, beispielsweise für akustooptischen Ablenkung, erst durch einen entsprechend elektronischen Aufwand erreicht werden könnte.

Bei Bildspeichern wird zur Synchronisation der Zeilen üblicherweise ein eigener Generator benutzt, der das Auslesen der einzelnen Helligkeits- und Farbwerte aus dem Bildspeicher synchronisiert. Das würde beim angegebenen Videosystem aber eine genaue Regelung der Position des Polygonspiegels erfordern, was einen erhöhten elektronischen Aufwand bedeutet. Deswegen sieht die Erfindung vor, daß der Bildspeicher zum Auslesen des Videobildes mit Synchronisationsimpulsen für Zeilen- und/oder Bildbeginn aus der Rastersteuerung beaufschlagbar ist. Gemäß der Erfindung werden die Synchronisationsimpulse aus der aktuellen Drehung des Drehspiegels gewonnen. Die Geschwindigkeit des Drehspiegels muß dann nicht genau mit der Zeilenfrequenz übereinstimmen. Dadurch wird der technische Aufwand verringert.

Die Synchronisationsimpulse können vorzugsweise induktiv oder durch Bestimmung des Zeitpunkts gewonnen werden, in dem ein Lichtbündel, beispielsweise von einem Meßlaser oder der Lichtquelle selbst, von einer Polygonfläche reflektiert wird.

Bei sehr hohen Bild- und Zeilenfrequenzen müssen für die Synchronisation auch Speicherlaufzeiten berücksichtigt werden. Diese können sich von Fall zu Fall stark ändern, da die Signalaufbereitung für unterschiedliche Bildpunkt- und Zeilenzahl je nach Eingangsnorm und Ausgangsnorm sehr unterschiedlich sein kann. Dies kann Probleme bei der Synchronisation des ausgelesenen Bildes mit sich bringen. Diese werden gemäß einer bevorzugten Weiterbildung der Erfindung dadurch gelöst, daß die Synchronisationsimpulse der Rastersteuerung mit einem durch die maximalen Speicherlaufzeiten vorgegebenen Zeitintervall zeitlich vor jedem durch die Rastersteuerung vorgegebenen Zeilenanfang erzeugbar sind und eine Verzögerungsschaltung zur Anpassung der Synchronisationssignale auf die aktuelle Verzögerungszeit vorgesehen ist.

Aufgrund dieser Weiterbildung der Erfindung können die Synchronisationsimpulse zu einem fest definierten Zeitpunkt in bezug auf den Start einer Zeile erzeugt werden, was bei unterschiedlichen Betriebsbedingungen, beispielsweise bei Änderung eines der beiden Parametersätze, keine mechanischen Änderungen für die Abnahme der Synchronisationsimpulse von den beweglichen Spiegeln erforderlich macht. Die Verzögerungszeit wird dagegen rein elektronisch durch eine durch den Parametersatz zur Darstellung der gewünschten Bildaufbereitung im Bildspeicher bestimmte Zeit über die Verzögerungsschaltung eingestellt.

Als Bildspeicher können verschiedenste Speichertypen eingesetzt werden. Es bieten sich beispielsweise Analogspeicher an, je einer für jedes Farbsignal bei Farbvideobildern. Solche Bildspeicher speichern die Bilder beispielsweise elektrisch über einen Elektronenstrahl als Ladungen auf einer Platte oder optisch auf einem nachleuchtenden Bildschirm, wobei die Platte oder der Bildschirm durch einen zweiten Elektronenstrahl wie bei einer Fernsehkamera wieder ausgelesen werden kann. Derartige Bildspeicher haben den Vorteil, daß zur Normumsetzung nur wenig Aufwand betrieben werden muß. Eine Signalaufbereitung ist jedoch nur in sehr beschränktem Maße möglich, da ein solcher Bildspeicher es nicht gestattet, ohne großen Aufwand bei der Signalumsetzung besondere mathematische Algorithmen zur Änderung der Auflösung für den zweiten Parametersatz anzuwenden.

Gemäß einer bevorzugten Weiterbildung der Erfindung ist ein digitaler Speicher vorgesehen, bei dem die Anzahl der vorhandenen Speicherplätze größer oder gleich der Zahl der erforderlichen Speicherplätze zum Speichern der Farb- und/oder Helligkeitswerte ist, multipliziert mit der Anzahl der maximal darstellbaren Bildpunkte, und bei dem die vorhandenen Speicherplätze mit der Farb- und/oder Helligkeitsinformation frei adressierbar sind.

Ein digitaler Bildspeicher gestattet die Anwendung verschiedener Algorithmen zur Bildaufbereitung, vor allen Dingen, wenn er frei adressierbar ist. Dafür kann ein Videoprozessor verwendet werden, der mit demselben Speicher arbeitet und die Bilder, beispielsweise durch bekannte Algorithmen zur Auflösungserhöhung oder Auflösungserniedrigung, bearbeitet, je nachdem, ob der Parametersatz zur Darstellung eine höhere oder kleinere Auflösung als der Parametersatz für das Einlesen in den Speicher erfordert. Digitale Speicher sind auch kostengünstiger und besser verfügbar als analoge Speicher.

Die angegebene Vorschrift zur Wahl der Zahl der Speicherplätze begrenzt den Aufwand auf die für die Zahl der Bildpunkte nötigen Speicherplätze. Dadurch wird der Speicherplatz besser genutzt, als wenn beispielsweise die Farb- und/oder Helligkeitswerte bezüglich der Adresse gemäß Zeilen abgelegt würden. In diesem Fall wäre die Anzahl der Speicherplätze mindestens so groß zu wählen wie die maximale Zeilenzahl, multipliziert mit der maximal möglich auftretenden Anzahl der Bildpunkte pro Zeile, was im allgemeinen einen wesentlich größeren Speicherbereich erforderlich machen würde. Dagegen können bei der angegebenen Auswahl des digitalen Speichers die Daten sequentiell gemäß der für die Darstellung zeitlichen Abfolge im Speicher abgelegt werden, so daß die Zugriffszeit sehr gering ist.

Da bei dem erfindungsgemäßen Videosystem aufgrund von verschiedenen Zeilenfrequenzen des ersten Parametersatzes und des zweiten Parametersatzes auch Impulse für das Einlesen und Auslesen des Bildspeichers gleichzeitig auftreten können, werden Störungen erzeugt, da ein Speicherplatz im Speicher entweder über die Adressen für das Einlesen oder für das Auslesen, aber nicht gleichzeitig für beide, adressiert werden kann. Das Einlesen und das Auslesen sollten deswegen miteinander synchronisiert werden. Eine einfache Torschaltung, die beispielsweise das Einlesen verbietet, wenn Ausgelesen wird, ist dafür wenig empfehlenswert, da dabei möglicherweise Daten verlorengehen können.

Eine bevorzugte Weiterbildung der Erfindung sieht vor, daß der digitale Bildspeicher eine Vorrangschaltung aufweist, die bei zeitgleichem Adressieren für das Abspeichern und das Auslesen der Information in Speicherplätze und aus Speicherplätzen dem Adressieren für das Auslesen den Vorrang gibt, die Adresse zum Speichern sowie die zu speichernde Information zwischenspeichert und die zu speichernde Information erst nach Beendigung des Auslesens im Speicher ablegt. Aufgrund dieser Schaltung wird dem Auslesen der Vorrang eingeräumt, was besonders deswegen zweckmäßig ist, weil bei Dreh- und Schwenkspiegeln aufgrund der Trägheit keine Wartezeiten zum Darstellen eines Bildpunktes erlaubt sind, wenn man eine gute Bildqualität erreichen will. Die eingangsseitige Bildinformation geht bei der genannten Weiterbildung der Erfindung auch nicht verloren, da sie zwischengespeichert und später in den Bildspeicher eingelesen wird, wenn nach Beendigung des Auslesens Zeit zur Verfügung steht. Wie nachfolgend anhand eines Ausführungsbeispiels deutlich gemacht wird, kann dies über einen FIFO-Speicher (First In - First Out) zum Zwischenspeichern mit einer entsprechenden Ansteuerelektronik leicht verwirklicht werden. Das angegebene Merkmal erhöht also in vorteilhafter Weise ohne wesentlichen Aufwand die Qualität der Bilddarstellung.

Gemäß einer anderen bevorzugten Weiterbildung der Erfindung wird die Qualität des Bildes dadurch erhöht, daß als Bildaufbereitungseinrichtung ein Videoprozessor vorgesehen ist, der bei unterschiedlicher Bildpunkt- und/oder Zeilenzahl im ersten Parametersatz, verglichen mit dem zweiten Parametersatz, die Bildpunkte gemäß letzterem zur Darstellung aus den Helligkeits- und/oder Farbwerten des abgespeicherten Videobildes interpoliert. Aufgrund der Bildaufbereitungseinrichtung können Farb- und Helligkeitswerte vom ersten Parametersatz zum Darstellen des Videobildes mit dem zweiten Parametersatz auch transformiert werden. Das ist vor allem dann vorteilhaft, wenn die Bildpunkt- und/oder Zeilenzahl von der des eingelesenen Bildes verschieden ist. Zur Veranschaulichung sei angenommen, daß bei der Darstellung doppelt so viele Zeilen vorgesehen sind wie bei dem in den Bildspeicher eingelesenen Bild. Dann könnte jede zweite Zeile bei der Bilddarstellung aus den bildmäßig vorherliegenden und nachfolgenden Zeilen des gespeicherten Bildes interpoliert werden. Zur Interpolation bieten sich verschiedene Algorithmen an. Eine Flexibilität für verschiedene Algorithmen wird dadurch erreicht, daß man als Bildaufbereitungseinrichtung einen Videoprozessor einsetzt.

Bei einer großen Anzahl von Bildpunkten kann es aber bei Videoprozessoren zeitliche Probleme geben, insbesondere dann, wenn ein komplizierter Algorithmus mit vielen Multiplikationen verwendet werden soll. Dieses Zeitproblem läßt sich dadurch umgehen, daß gemäß einer bevorzugten Weiterbildung der Erfindung ein zweiter Speicher oder Speicherbereich vorgesehen ist, in dem durch die Bildaufbereitungseinrichtung interpolierte Helligkeits- und/oder Farbwerte zum Auslesen für die Darstellungsvorrichtung abgelegt werden. Man erhält so zwei Speicherbereiche für das einzulesende und auszulesende Bild, was die zur Verfügung stehende Zeit für den Videoprozessor auf die Zeit eines Bildes verlängert und Speicherzugriffe auf Hilfsspeicherbereiche zum Ausführen von Zwischenrechnungen vermeidet. Außerdem können dann auch Synchronisationsprobleme zwischen dem Einlesen von Daten und dem Auslesen von Daten verringert werden, wenn die zum Einlesen und Auslesen benutzten Speicher oder Speicherbereiche unabhängig voneinander adressierbar sind. Synchronisationsprobleme für Datenzugriffe durch den Videoprozessor können durch handelsübliche DMA-Bausteine (Direct Memory Access) vermieden werden.

Weiter hat die Trennung von Speicherbereichen zum Einlesen und zum Auslesen den Vorteil, daß mehrere Bildprozessoren parallel arbeiten können, denen verschiedene Bildteile zur Bearbeitung zugewiesen werden, was die zur Verfügung stehende Zeit für die Transformation der Helligkeits- und/oder Farbwerte für die Darstellung weiter verkürzt.

Eine weitere Möglichkeit zur Verringerung der Zeit zur Bildaufbereitung besteht gemäß einer anderen bevorzugten Weiterbildung der Erfindung darin, daß in die Bildaufbereitungseinrichtung mehr als eine Zeile aus dem Bildspeicher einlesbar ist, wobei die Farb- und/oder Helligkeitswerte der eingelesenen Zeilen zur Erzeugung einer Zeile zur Darstellung analog gewichtet summierbar sind. Aufgrund einer derartigen Analogschaltung werden Multiplikationen sehr schnell durchgeführt, so daß höhere Raten für die Darstellung eines Bildes als bei digitaler Interpolation mittels eines Videoprozessors möglich sind. Wie aus einem nachfolgenden Ausführungsbeispiel hervorgeht, lassen sich bei einer solchen gewichteten Summierung auch unterschiedliche Algorithmen verwenden. Dadurch ist eine ähnlich große Flexibilität für verschiedene Algorithmen wie bei Videoprozessoren möglich.

Das Verfahren der analogen Summierung ist nicht nur zwischen Zeilen anwendbar, sondem auch zwischen Bildpunkten einer Zeile, indem aus dem Bildspeicher die Farb- und Helligkeitswerte einer Zeile um beispielsweise einen Bildpunkttakt zeitlich verzögert werden, wonach die verzögerte Zeileninformation mit der unverzögerten analog gewichtet summiert wird.

Alternativ dazu wird gemäß einer weiteren vorzugsweisen Ausgestaltung der Erfindung in der Bildaufbereitungseinrichtung ein Tiefpaß-Filter mit einer Grenzfrequenz vorgesehen, die sich aus einem vorgegebenen Faktor, multipliziert mit dem kleinsten Produkt aus Bildpunkte/Zeile mal Zeilenfrequenz, bezüglich beider Parametersätze ergibt. Dabei wird die Interpolation zwischen Farb- und Helligkeitswerten innerhalb einer Zeile mit einem Tiefpaß-Filter auf analoge Weise interpoliert. Der die Interpolation bestimmende Parameter ist dabei die Grenzfrequenz des Tiefpaß-Filters. Die Grenzfrequenz ist dabei im wesentlichen durch die größere Zeit pro Bildpunkt gegeben, der durch die beiden Parametersätze bestimmt ist. Im Fall, daß die Bildpunktzeit für die eingelesenen Bilder größer als die der Bildpunkte für die Darstellung ist, muß das Signal für den Bildpunkt, welches aufgrund des digitalen Bildspeichers einen rechteckigen Impuls darstellt, für die Darstellung des Bildpunktes über das Tiefpaß-Filter verschliffen werden, da sonst an den scharfen Flanken der Rechteckimpulse bei der höher aufgelösten Darstellung eine Unsicherheit im Farbton gegeben wäre, was sich als Flimmern im Bild zeigen könnte.

Wenn dagegen die Zeitdauer eines Bildpunktes für die Darstellung größer als die für einen abgespeicherten Bildpunkt ist, wären die Farb- und Helligkeitswerte für die Darstellung bezüglich des Ortes des dargestellten Bildpunktes auf dem Bildschirm ungenau festgelegt. In beiden Fällen ergibt sich für die günstige Zeitkonstante des Tiefpaß-Filters die größere Zeit pro Bildpunkt von beiden Parametersätzen. Der im Merkmal angegebene Faktor bestimmt dabei, wie stark über aufeinanderfolgende Bildpunkte gemittelt werden soll, und legt damit die Interpolation zwischen den Bildpunkten fest. Der Faktor erlaubt somit eine gewisse Flexibilität in der Wahl des Interpolationsalgorithmus.

Vor allem ermöglicht diese Ausgestaltung der Erfindung eine besonders schnelle Bildverarbeitung und Auflösungsanpassung der dargestellten Bilder aus den eingelesenen Bildern. Ein weiterer Vorteil ergibt sich dadurch, daß über das Tiefpaß-Filter auch hochfrequente Störungen, die beispielsweise von der Zwischenfrequenz eines Tuners stammen können, ausgefiltert werden. Die dargestellten Bilder werden also weitgehend störungsfrei.

Tiefpaß-Filter haben üblicherweise Kondensatoren, die sich bei einer Signalverarbeitung der genannten Art aufladen können, so daß sich die Helligkeit von Zeile zu Zeile etwas ändern kann. Bei Berücksichtigung einer Schwarzschulter am Zeilenanfang als Information im Bildspeicher wird eine derartige Verschiebung durch die Interpolation automatisch kompensiert. Den dafür notwendigen zusätzlichen Speicherplatz kann man einsparen, wenn man bei jeder so erzeugten Zeile, wie es aus der üblichen Fernsehtechnik bekannt ist, mit einer Klemmschaltung den Schwarzwert vor jeder dargestellten Zeile neu definiert. Deswegen ist gemäß einer Weiterbildung der Erfindung hinter dem Tiefpaß-Filter eine Klemmschaltung vorgesehen, was die Qualität der Darstellung verbessert und den nötigen Speicherplatz verringert.

Bei den Bildern, die in den Bildspeicher eingelesen werden, können sich die für die Farbwerte genannten Primärvalenzen stark unterscheiden. Beispielsweise weicht die FCC-Norm für die Farbdefinition vor allem bei Grün von der der EBU-Norm ab. Deshalb ist es zweckmäßig, für die Anpassung verschiedener Normen gemäß einer bevorzugten Weiterbildung der Erfindung eine Schaltung zur Farbanpassung bei unterschiedlichen Signaldefinitionen für Farb- und/oder Helligkeitswerte in den Parametersätzen für das Abspeichern und Auslesen vorzusehen. Damit werden auch Farbtonverfälschungen durch unterschiedliche Normen ausgeglichen und die Qualität der Bilddarstellung wird verbessert.

Die Erfindung wird nachfolgend anhand der Figuren im Prinzip beispielshalber noch näher erläutert. Es zeigen:
- Fig. 1: ein erfindungsgemäßes Videosystem mit Laserprojektion;
- Fig. 2: eine Schaltung für einen Bildspeicher, der in einem Videosystem gemäß Fig. 1 eingesetzt werden kann;
- Fig. 3: einen Bildspeicher, bei dem eine Signalaufbereitung mit Hilfe eines Videoprozessors durchgeführt wird;
- Fig. 4: eine Schaltung mit einem Bildspeicher, in der die Farbwerte für die dargestellten Bildpunkte analog aufbereitet werden.

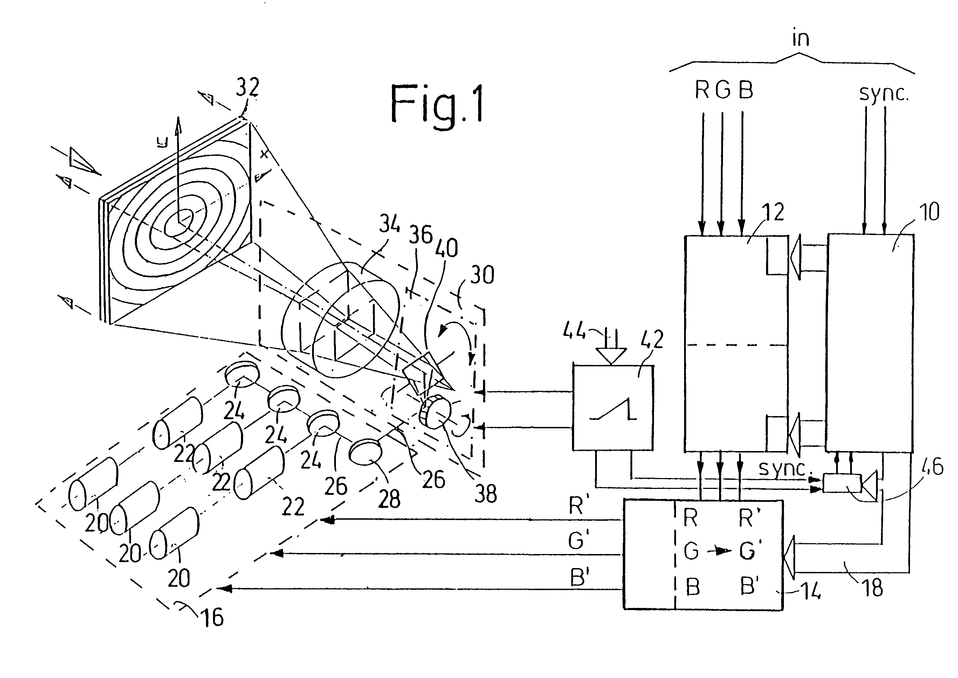

In Fig. 1 ist ein Videosystem gezeigt, in das Farbwertsignale R, G, B und Synchronisationssignale gemäß einem die Zeilenzahl, Bildpunktzahl, Zeilenfrequenz, Bildfrequenz und die Signaldefinition für Farbe und Helligkeit der Bildpunkte enthaltenden ersten Parametersatz eingegeben werden. Dieser Parametersatz kann durch eine Norm vorgegeben sein, beispielsweise entsprechend PAL, PAL PLUS, PAL 50 Hz Bildfrequenz, PAL 100 Hz Bildfrequenz, HDTV, HD-MAC, NTSC oder MUSE. Die Synchronisationssignale des Videobildes werden an Eingänge einer Systemkontrollschaltung 10 angelegt. Die Systemkontrollschaltung 10 dient dazu, alle Steuersignale, die im Videosystem nach Fig. 1 verwendet werden, gemäß separaten Parametersätzen für das Einlesen und die Darstellung des Videobildes zu erzeugen, zu verwalten und bereitzustellen. Für das Abspeichern digitalgewandelter R, G, B-Signale generiert sie aus den anliegenden Synchronisationssignalen die Speicheradressen eines digitalen Bildspeichers 12, in dessen Speicherplätzen die analog/digital gewandelten R, G, B-Signale abgespeichert werden.

In Fig. 1 ist in der Mitte des Bildspeichers 12 eine durchbrochene Linie eingezeichnet, die verdeutlichen soll, daß das Auslesen und Einlesen des Bildspeichers 12 separat vorgenommen werden kann.

Zum Auslesen aus dem Bildspeicher werden die Adressen von der Systemkontrollschaltung 10 gemäß dem zweiten Parametersatz zur Darstellung vorgegeben. An Ausgängen des Bildspeichers 12 liegen die zur Darstellung verwendbaren R, G, B-Signale analog an, nachdem die im Bildspeicher 12 digital abgespeicherten R, G, B-Signale analog zurückgewandelt wurden.

Die analogen R, G, B-Signale werden an die Eingänge einer Steuereinrichtung 14 angelegt, die eine Lichtquelle 16 bezüglich Farbe und Helligkeit steuert. Die Lichtquelle 16 wird im allgemeinen nicht dieselben Primärvalenzen haben, wie die gesendeten R, G, B-Signale, so daß in der Steuereinrichtung 14 ein Matrixschaltkreis vorgesehen ist, der die R, G, B-Signale auf die Primärvalenzen R', G', B' der Lichtquelle 16, transformiert. Die erforderliche Transformationsmatrix kann normgemäß verschieden sein, da die R, G, B-Signale beispielsweise gemäß den Primärvalenzen der FCC-Norm oder der EBU-Norm definiert sein können. Deshalb kann die Systemkontrollschaltung 10 über eine Steuerleitung 18 die die Matrixkoeffizienten bestimmenden Bauelemente im Matrixschaltkreis einstellen.

Weiter enthält die Steuereinrichtung 14 auch Verstärker und Schaltkreise für nichtlineare auf die Lichtquelle 16 angepaßte Entzerrungen, damit eine optimale Helligkeits- und Farbtonqualität durch die Lichtquelle 16 erreichbar ist.

Die Lichtquelle 16 des Ausführungsbeispiels enthält drei Laser 20 für die Farben Rot, Grün und Blau. Diese sind im Ausführungsbeispiel Argon- und Kryptonlaser der Serie SKYLIGHT 400 von der Firma COHERENT, bei denen mit Filtern BP 458 und BP 514,5 von Schott, Mainz, die verwendeten Wellenlängen der Laser auf 647,1 nm für Rot, 514,5 nm für Grün und 458,0 nm für Blau selektiert sind. Da sich die Lichtintensitäten von Lasern der genannten Art nicht schnell genug ändern lassen, werden die Laser 20 im Dauerstrich betrieben und ihre Lichtintensität über Modulatoren 22 gesteuert. Die Modulatoren 22 sind hier DKDP-Kristalle, welche die Lichtintensitäten über Polarisationsänderungen bestimmen. Die Modulatoren werden direkt von den aus der Steuereinrichtung 14 ausgegebenen Signale R', G', B' angesteuert.

Die aus den Modulatoren austretenden Lichtbündel werden über dichroitische Spiegel 24 zu einem gemeinsamen Lichtbündel 26 zusammengefaßt und über einen Umlenkspiegel 28 in eine nachfolgende Optik 30 reflektiert, mit welcher das Lichtbündel 26 auf einen Bildschirm 32 gerichtet wird. Im Ausführungsbeispiel von Fig. 1 sitzt der Betrachter in Richtung der eingezeichneten dünnen Pfeile. Es handelt sich also um eine Rückprojektion. Dieselben Prinzipien wie im Ausführungsbeispiel von Fig. 1 lassen sich jedoch auch für Aufprojektionen verwenden.

In der Optik 30 ist ein Linsensystem 34 vorgesehen, mit dem das Lichtbündel 26 auf den Bildschirm 32 geworfen wird. Weiter enthält die Optik 30 eine Rastereinrichtung 36, die das Lichtbündel 26 zur Erzeugung eines Videobildes auf dem Bildschirm 32 bild- und zeilenmäßig ablenkt. Erfindungsgemäß ist die Rastereinrichtung so ausgelegt, daß das Lichtbündel 26 innerhalb eines vorgegebenen Bildfeldes auf beliebige Punkte des Bildschirms 32 geworfen werden kann. Zur zeilenmäßigen Ablenkung auf dem Bildschirm 32, der in Fig. 1 eingezeichneten x-Richtung, ist ein Polygonspiegel 38 vorgesehen, während über einen Schwenkspiegel 40 die bildmäßige Ablenkung in der eingezeichneten y-Richtung vorgenommen wird.

Der Polygonspiegel 38 und der Schwenkspiegel 40 werden durch Signale aus einer Rastersteuerung 42 angesteuert. Die Rastersteuerung 42 legt nicht nur die Umdrehungsfrequenz und die Ablenkung des Schwenkspiegels fest, sondern auch die Amplitude des Schwenkspiegels 40, um unterschiedliche Bildseitenverhältnisse, wie 3 zu 4 oder 9 zu 16 bei den unterschiedlichen Normen berücksichtigen zu können, ohne Bildpunkte dunkeltasten zu müssen, was Laserleistung spart.

Zur Einstellung der Amplituden und Frequenzen für Polygonspiegel und Schwenkspiegel empfängt die Rastersteuerung 42 die entsprechenden Signale über Steuerleitungen 44, die von der Systemkontrollschaltung 10 gemäß dem zweiten Parametersatz ausgegeben werden. Um auf aufwendige Regeleinrichtungen verzichten zu können, werden die Synchronimpulse für das darzustellende Bild nicht separat erzeugt und entsprechend gut nachgeregelt, sondern durch die Rastersteuerung 42 aus von dieser erfaßten Positionen des Polygonspiegels und des Schwenkspiegels gewonnen. Das Erfassen kann beispielsweise induktiv über Magneten am Polygonspiegel 38 oder am Schwenkspiegel 40 erfolgen. Man könnte aber auch einen weiteren Laser auf eine der Polygonflächen lenken und bei einer bestimmten Position dessen reflektiertes Lichtbündel durch einen lichtempfindlichen Detektor registrieren, um die Position des Polygonspiegels zu erfassen und daraus ein Synchronisationssignal für den Zeilenanfang zu gewinnen.

Das so gewonnene Synchronsignal für die Zeile wird von der Rastersteuerung 42 der Systemkontrollschaltung 10 zur Ansteuerung des Bildspeichers 12 zugeführt. Dabei werden Speicherlaufzeiten des Bildspeichers 12 berücksichtigt, indem die Synchronsignale um ein bestimmtes Zeitintervall vor dem Zeilenstart ausgegeben werden. Die Speicherlaufzeiten des Bildspeichers 12 können aber unterschiedlich lang sein, je nachdem ob ein Algorithmus zur Erzeugung von Zwischenzeilen nötig ist und wie zeitaufwendig dieser ist. Deswegen werden die Synchronisationssignale mit einem festen Zeitintervall vor dem Zeilenstart ausgegeben, das größer als die längstmögliche Speicherlaufzeit im Bildspeicher ist, und die Synchronisationssignale werden dann über eine Verzögerungsschaltung 46 verzögert, deren Verzögerungszeit von der Systemkontrollschaltung 10 für die aktuell benötigte Verzögerung eingestellt wird.

Die Synchronisationssignale werden nach Durchlaufen der Verzögerungsschaltung 46 der Systemkontrollschaltung 10 zugeführt, wo die Adressen zum Auslesen des Bildspeichers beispielsweise durch Hochzählen eines Zählers durch die Synchronisationssignale erzeugt werden.

Für das dargestellte Beispiel von Fig. 1 sind besondere Anforderungen an den Bildspeicher bezüglich des Zeitpunktes zu stellen, zu dem die Farbwertsignale von Bildpunkten an seinen Ausgängen anliegen und insbesondere für die Datenaufbereitung, wenn bis zu den bei der HDTV-Norm benötigten hohen Frequenzen von 20 MHz eine qualitativ gute Darstellung möglich sein soll. Der Aufbau solcher Bildspeicher wird in den nachfolgenden Figuren näher erläutert.

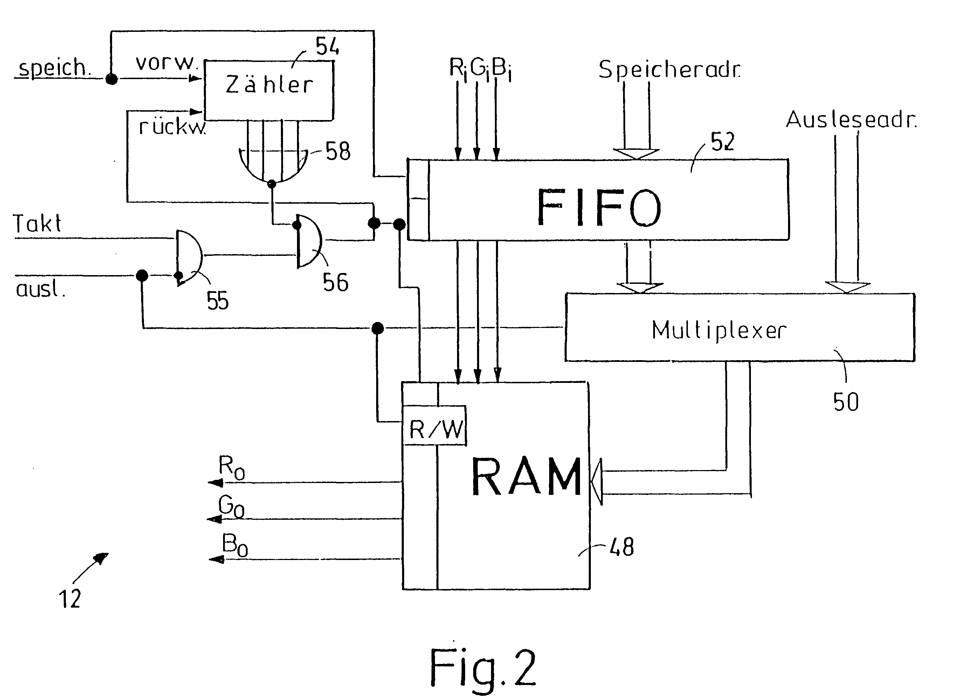

In Fig. 2 ist ein Bildspeicher 12 gezeigt, bei dem die digital gewandelten Farbwertsignale Rᵢ, Gᵢ, Bᵢ in einem RAM 48 (Random Access Memory) abgelegt werden, und an dessen Ausgängen digital abgespeicherten Farbwerte R₀, G₀, B₀ ausgelesen werden können. Die Speicheradressen werden dabei über einen Multiplexer 50, je nachdem ob ausgelesen oder gespeichert werden soll, aus den Speicherausleseadressen und den Speicheradressen auf die Adreßleitung des RAM's 48 gelegt. Der Multiplexer 50 wird in Fig. 2, wie auch das Speichern und Auslesen einen R/W-Eingang (Read/Write) des RAM's 48, durch einen Ausleseimpuls gesteuert, der jeweils von der Systemkontrollschaltung 10 dann angelegt wird, wenn die Farbwerte R₀, G₀, B₀ ausgelesen werden sollen.

In der Schaltung von Fig. 2 wird vermieden, daß Auslese- und Einleseadressen gleichzeitig am RAM 48 anliegen, indem die Farbwertsignale für die Darstellung R₀, G₀, B₀ synchron zur Steuerung des Bildpunktes durch den Schwenkspiegel 40 und den Polygonspiegel 38 ausgelesen werden, jedoch das Speichern in das RAM 48 nicht direkt erfolgt, sondern die zu speichernden Farbwertsignale und die Speicheradressen durch ein Speichersignal initiiert in einem FIFO-Speicher 52 (First In First Out) abgelegt werden.

Das Speichersignal liegt auch an einem Vorwärtszähleingang eines Vorwärts/Rtückwärts-Zählers 54 an, mit dem über die Anzahl der abgespeicherten Daten im FIFO-Speicher 52 buchgeführt wird.

Der Inhalt des FIFO-Speichers 52 wird erst dann in das RAM 48 eingeschrieben, wenn kein Ausleseimpuls vorliegt. Zum Übertragen des Speicherinhalts vom FIFO-Speicher 52 in das RAM 48 dienen externe Taktsignale, die nur dann über Gatter 55 und 56 auf einen Ausleseeingang des FIFO-Speichers 52 gelegt werden, wenn kein Auslegeimpuls für das RAM 48 anliegt und der Vorwärts-/Rückwärts-Zähler 54 über ein NOR-Gatter 58 signalisiert, daß Daten im FIFO-Speicher vorhanden sind. Der Vorwärts/Rückwärts-Zähler 54 wird beim Auslesen des FIFO-Speichers über den Takt zurückgezählt.

Die eingegebenen Daten für die Farbwertsignale Rᵢ, Gᵢ, Bᵢ werden also asynchron über einen Takt eingegeben. Dabei muß die Taktfrequenz wesentlich höher sein, als die Taktrate für das Speichern der in das Videosystem eingegebenen Farbwerte R, G, B. Je höher die Taktrate ist, desto geringer ist der benötigte Speicherplatz im FIFO-Speicher 52.

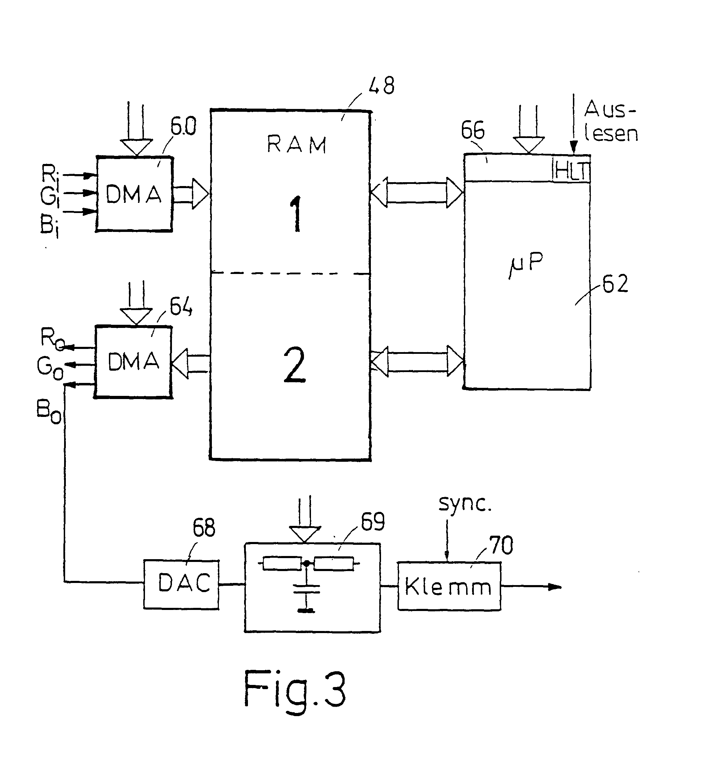

In Fig. 3 ist das Synchronisationsproblem anders gelöst. Dabei hat das RAM 48 zwei Speicherbereiche 1 oder 2, bzw. kann aus zwei verschiedenen unterschiedlich adressierbaren Speichern aufgebaut sein. Die Farbwertsignale Rᵢ, Gᵢ, Bᵢ werden dabei über einen DMA-Baustein 60 in den RAM-Bereich 1 eingespeichert und mit Hilfe eines Prozessors 62 in den RAM-Bereich 2 übertragen. Vom RAM-Bereich 2 können die Farbwertsignale wieder über einen DMA-Baustein 64 ausgelesen werden. Üblicherweise sind DMA-Bausteine, wie hier 60 und 64, einem zugehörigen Prozessor 62 in einem Datenverarbeitungssystem angepaßt, so daß Synchronisationsprobleme, wie das im Zusammenhang mit Fig. 2 geschilderten, nicht zu befürchten sind. Bei zeitkritischem Verhalten kann es aber nötig sein, beim Auslesen aus dem Speicherbereich 2 den Mikroprozessor durch den Ausleseimpuls in einen Haltezustand zu fahren, wie durch den Pfeil Auslesen am Eingang HLT am Prozessor 62 angedeutet ist.

Neben der einfacheren Synchronisation mit Standardbausteinen in Fig. 3 bietet der Prozessor 62 auch den Vorteil, daß die Daten für die Bilddarstellung aufbereitet werden können, indem beispielsweise Algorithmen zur Ermittlung von Zwischenzeilen oder der Auflösungserhöhung auf die Daten angewendet werden. Für diesen Zweck ist vorgesehen, über einen Port 66 des Prozessors 62 Datenworte von der Systemkontrollschaltung 10 einzulesen, die den Prozessor 62 veranlassen, den gewählten Algorithmus bei der Datenumwandlung und der Datenübertragung von RAM-Bereich 1 zum RAM-Bereich 2 auszuführen.

Bei zeitkritischen Übertragungsbedingungen kann ein einzelner Prozessor 62 zu langsam sein, so daß man eine Reihe parallel arbeitende Prozessoren 62 verwenden wird, die auf unterschiedliche Speicherbereiche entsprechend verschiedener Bildsegmente zugreifen.

In Fig. 3 wird weiter am Beispiel des ausgelesenen Farbwertsignals Bₒ gezeigt, wie dieses nach Auslesen aus dem RAM 48 weiter verarbeitet werden kann. Das digital vorliegende Farbwertsignal B₀ wird zuerst über einen DAC 68 analog gewandelt. Das so erzeugte analoge Signal wird danach über einen Tiefpaß 69 geführt. Der Tiefpaß 69 dient dazu, eventuelle hochfrequente Einstreuungen auf das Analogsignal, beispielsweise aus der Zwischenfrequenz eines Tuners, zu unterdrücken. Es führt jedoch noch eine weitere Funktion aus, indem es die rechteckigen Analogwerte aus dem DAC 68 glättet bzw. über ein durch den Tiefpaß 69 vorgegebenes Zeitintervall über aufeinanderfolgende Farbwerte für Bildpunkte mittelt. Das heißt, bei entsprechender Auslegung des Tiefpasses 69 kann auf Algorithmen durch den Prozessor 62 zur Anpassung an eine kleinere Anzahl von Bildpunkten pro Zeile für die Darstellung gegenüber der Anzahl von Bildpunkten beim eingespeicherten Videobild verzichtet werden. Deshalb kann auf einen vom Prozessor 62 durchzuführenden Algorithmus zur Mittelung über Bildpunkte innerhalb einer Zeile entfallen, was die Datenübertragung vom RAM-Bereich 1 zum RAM-Bereich 2 beschleunigt. Der Tiefpaß 69 ist dann zweckmäßigerweise von der Systemkontrollschaltung 10 auf verschiedene Zeitkonstanten einstellbar, beispielsweise indem über Analogschalter im Tiefpaß 69 unterschiedliche Kondensatoren zugeschaltet werden. Durch den Tiefpaß 69 verschiebt sich jedoch auch das Signalmaximum zeitlich, so daß die Zeitkonstante des Tiefpasses 69 bei der Einstellung der Verzögerungsschaltung 46 durch die Systemkontrollschaltung 10 berücksichtigt werden sollte.

Wenn man davon Gebrauch machen will, über den Tiefpaß 69 mehrere Bildpunkte zu mitteln, ist es zweckmäßig, die Zeitkonstante des Tiefpasses 69 so zu wählen, daß sie jeweils der kleinsten Zahl zwischen der Zeit pro Bildpunkt bezüglich der Parametersätze zum Einspeichern und Auslesen in das ROM 18 proportional ist, da einerseits der Informationsgehalt eines Bildes auch durch höhere Auflösung nicht vergrößert werden kann, andererseits nur ein Informationsgehalt dargestellt werden soll, der durch die Auflösung des zweiten Parametersatzes zur Darstellung gegeben ist. Über einen wählbaren Faktor auf die Grenzfrequenz des Tiefpasses 69 ergibt sich auch die Möglichkeit verschieden starke Glättungen vorzusehen, was unterschiedlichen Interpolationen zwischen Bildpunkten innerhalb einer darzustellenden Zeile entspricht.

Aufgrund der Aufladung von Kondensatoren im Tiefpaß 69 kann sich die Schwarzschulter von Zeile zu Zeile im Videobild verschieben. Deswegen ist nachfolgend eine Klemmschaltung 70 vorgesehen, die das Ausgangssignal auf Null zieht, bevor das so gewonnene Zeilensignal auf die Steuereinrichtung 14 zur Weiterbehandlung gegeben wird. Das Klemmen mit der Klemmschaltung 70 erfolgt über das Zeilensynchronisationssignal für das darzustellende Bild.

Für das Ein- und Auslesen der Farbwertsignale in das RAM 48 sind die DMA-Bausteine 60 und 64 von der Steuerkontrollschaltung 10 programmierbar, wie durch die breiten Pfeile an den Bausteinen 60 und 64 angedeutet ist. Bei manchen erhältlichen DMA-Bausteinen läßt sich dies direkt durchführen, bei anderen erfolgt jedoch die Programmierung über Datenleitungen zum Prozessor. Im letzteren Fall müssen die Werte zur Programmierung über die Steuerkontrollschaltung 10 über einen Port 66 des Mikroprozessors 62 eingelesen werden, der sie dann auf die DMA-Bausteine 60, 64 überträgt.

Das Zeitverhalten von Fig. 3 ist im wesentlichen durch die Prozessorzeiten des Prozessors 62 bestimmt. Bei sehr hohen Frequenzen, die bei HDTV bis zu 20 MHz betragen, ist das Beispiel von Fig. 3 wegen der heute erhältlichen, für komplexe Algorithmen und hohen Frequenzen aufgrund des zweiten Parametersatzes bei der Übertragung zu langsamen Prozessoren über parallel arbeitende Prozessoren realisierbar, was aber einen hohen Aufwand erfordert.

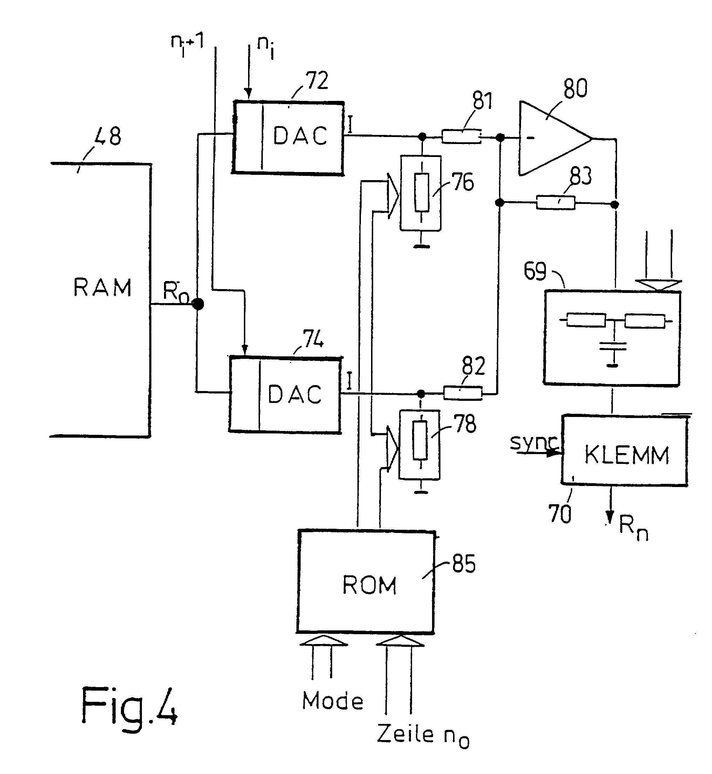

In Fig. 4 ist ein einfacheres Beispiel gezeigt, das auf einen Prozessor zur Datenaufbereitung verzichten kann. Die Datenaufbereitung ist hier beispielhaft an dem roten Farbwertsignal R₀, welches aus einem gemäß Fig. 2 geschalteten RAM 48 ausgelesen wird, gezeigt. Für die anderen Farbwertsignale ist dieselbe Schaltung anwendbar. Zum besseren Verständnis der Arbeitsweise in soll ferner angenommen werden, daß eine Zeile n₀ erzeugt werden soll, deren Farbwertsignal sich durch gewichtetes Summieren aus den Farbwertsignalen zweier Zeilen nᵢ und nᵢ₊₁ des in den Bildspeicher eingelesenen Bildes ergibt. Durch gewichtetes Summieren können auch Zwischenzeilen erzeugt werden, wenn die Zeilenanzahl des darzustellenden Bilds größer als die Zeilenzahl des im Bildspeicher eingelesenen Bilds ist. Man kann auch mehr als zwei Zeilen mit einer Schaltung gemäß Fig. 4 summieren, zur Vereinfachung ist jedoch die Schaltung nur für zwei Zeilen nᵢ und nᵢ₊₁ dargestellt.

Aus dem RAM 48 werden nach Adressieren über die Systemkontrollschaltung 10 je zwei Farbwerte von Bildpunkten, einer der Zeile nᵢ und einer der Zeile nᵢ₊₁ ausgelesen und in mit Eingangsspeichern versehenen Digital-Analogwandlern 72, 74 abgespeichert. Die Digital-Analogwandler 72, 74 haben einen Stromausgang, an dem ein Ausgangsstrom proportional zu dem abgespeicherten Digitalwert erzeugt wird. Die Ausgangsströme der Digital-Analogwandler 72 und 74 verursachen an einstellbaren Widerständen 76 und 78 einen Spannungsabfall. Einstellbare Widerstände können beispielsweise durch Zusammenschaltung von Widerständen über digital ansteuerbare Analogschalter verwirklicht werden, wobei die Schaltelemente beispielsweise Feldeffekttransistoren sind.

Der jeweilige Spannungsabfall an den einstellbaren Widerständen 76 und 78 wird über einen Operationsverstärker 80, der, wie aus dem Stand der Technik bekannt, mit Widerständen 81, 82, 83 beschaltet ist, summiert. Am Ausgang des Operationsverstärkers 80 entsteht also eine Spannung für die roten Farbwertsignale der darzustellenden Zeile n₀ aus Farbwerten, die entsprechend den Werten der einstellbaren Widerstände 76 und 78 gewichtet sind, von abgespeicherten Bildpunkten der Zeilen nᵢ und nᵢ₊₁ des Operationsverstärkers 80. Auf diese Weise wird die Zwischenzeile n₀ aus den Zeilen nᵢ und nᵢ₊₁ interpoliert. Die digitalen Werte für die Gewichte werden dafür aus einem ROM 85 ausgegeben, welches mit dem Digitalwert für die auszugebende Zeile n₀ adressierbar ist. Für die unterschiedliche bildmäßige Lage der Zeile nₒ relativ zu Eingangszeilen nᵢ und nᵢ₊₁ können so unterschiedliche Gewichte über das ROM 85 eingestellt werden, so daß man mit einer derartigen Schaltung auch bei nichtganzzahligem Vielfachen der Zeilen des abgespeicherten Bildes bezüglich des ausgegebenen Bilds arbeiten kann. Weiter wird das ROM 85 von der Systemkontrollschaltung 10 mit einem mit "Mode" bezeichneten Datenwort adressiert, wodurch verschiedene Speicherbereiche im ROM angesprochen werden. Durch das Datenwort sind verschiedene Arten der Interpolation durch Auswahl der verwendeten Gewichte bestimmt. Das mit "Mode" bezeichnete Datenwort wird abhängig vom Verhältnis der darzustellenden Ausgangszeilen zur Zeilenzahl des abgespeicherten Bildes gebildet.

Weiter zeigt die Schaltung in Fig. 4 wieder einen Tiefpaß 69 und eine Klemmschaltung 70, so daß, wie bezüglich Fig. 3 schon näher beschrieben wurde, aufgrund des Tiefpasses 69 über mehrere Bildpunkte in einer Zeile gemittelt werden kann, ohne den Schwarzwert zu verschieben.

Die Aufbereitung der Daten gemäß einer Schaltung von Fig. 4 gestattet also die Interpolation der Farbwertsignale von Zeilen gemäß bildmäßig übereinanderliegender und zeitlich aufeinanderfolgender Bildpunkten. Bei komplizierteren Algorithmen werden jedoch üblicherweise auch Bildpunkte in Betracht gezogen, die auf der Diagonalen eines Bildes liegen. Auch derartige Algorithmen kann man mit einer Schaltung gemäß Fig. 4 verwirklichen, wenn eingangsseitig im zusätzlichen Digital-Analogwandler auch Farbwertsignale zeitlich versetzter Bildpunkte eingespeichert sind, die über zusätzliche einstellbare Widerstände sowie weitere Widerstände am Eingang des Operationsverstärkers 80 summiert werden. Der zusätzliche Schaltungsaufwand für die Berücksichtigung von mehr als zwei Bildpunkten bei der zeilenmäßigen Ermittlung gemäß Fig. 4 ist also gering, so daß auch komplizierte Algorithmen mit einem derartigen Aufbau verwirklicht werden können.

## Patentansprüche

1. Videosystem zur Darstellung eines Videobildes, welches aus Bildpunkten aufgebaut ist, deren Farb- und/oder Helligkeitswerte (R; G; B) sequentiell gemäß einem ersten Parametersatz mit vorgegebenen Parameterwerten für Zeilenzahl, Bildpunktzahl, Zeilenfrequenz und Bildfrequenz in einem Bildspeicher (12) abspeicherbar sind, der gemäß einem zweiten Parametersatz mit anderen oder gleichen Parameterwerten zur Darstellung des abgespeicherten Videobildes mit einer Darstellungsvorrichtung (16, 30, 32) auslesbar ist, welche eine gemäß den Farb- und/oder Helligkeitswerten (R₀, G₀, B₀) der Bildpunkte steuerbare Lichtquelle (16) zur Erzeugung eines Lichtbündels (26) enthält, das über eine Optik (30) auf einen Bildschirm (32) projizierbar ist, wobei die Optik (30) eine Rastereinrichtung (36) aufweist, die einen Polygonspiegel (38) zur zeilenmäßigen Ablenkung des Lichtbündels (26) und einen Schwenkspiegel (40) zu dessen bildmäßiger vertikaler Ablenkung umfaßt und mit der das Lichtbündel (26) auf Rasterpunkte innerhalb eines zur Darstellung des Videobildes vorgegebenen Bildfeldes auf den Bildschirm (32) lenkbar ist, und wobei eine Rastersteuerung (42) zum Rastern des Lichtbündels (26) gemäß dem zweiten Parametersatz vorgesehen ist, wobei das Videosystem eine Bildaufbereitungseinrichtung (62; 72, 74, 76, 78, 80) aufweist, die bei unterschiedlicher Bildpunkt- und/oder Zeilenzahl im ersten Parametersatz gegenüber dem zweiten Parametersatz die Bildpunkte gemäß dem zweiten Parametersatz aus den Helligkeits- und/oder Farbwerten des abgespeicherten Videobildes interpoliert, **dadurch gekennzeichnet, daß** der Bildspeicher (12) zum Auslesen des Videobildes mit Synchronisationsimpulsen für Zeilen- und/oder Bildbeginn aus der Rastersteuerung (42) beaufschlagbar ist und daß die Synchronisationsimpulse aus von der Rastersteuerung (42) erfaßten Positionen des Polygonspiegels (38) und des Schwenkspiegels (40) abgeleitet werden.

2. Videosystem nach Anspruch 1, **dadurch gekennzeichnet, daß** die Synchronisationsimpulse über Magneten induktiv erzeugbar sind.

3. Videosystem nach Anspruch 1, **dadurch gekennzeichnet, daß** die Synchronisationsimpulse durch Bestimmung desjenigen Zeitpunktes erzeugbar sind, in welchem ein von einem Meßlaser ausgesandtes Lichtbündel von einer Polygonfläche des Polygonspiegels (36) reflektiert wird.

4. Videosystem nach Anspruch 1, **dadurch gekennzeichnet, daß** die Synchronisationsimpulse durch Bestimmung desjenigen Zeitpunktes erzeugbar sind, in welchem ein von der Lichtquelle selbst ausgesandtes Lichtbündel von einer Polygonfläche des Polygonspiegels (36) reflektiert wird.

5. Videosystem nach einem der Ansprüche 1 bis 4, **dadurch gekennzeichnet, daß** die Synchronisationsimpulse der Rastersteuerung (42) mit einem durch die maximalen Speicherlaufzeiten vorgegebenen Zeitintervall zeitlich vor jedem durch die Rastersteuerung (42) vorgegebenen Zeilenanfang erzeugbar sind und daß eine Verzögerungsschaltung (46) zur Anpassung der Synchronisationssignale auf die aktuelle Verzögerungszeit vorgesehen ist.

6. Videosystem nach einem der Ansprüche 1 bis 4, **dadurch gekennzeichnet, daß** der Bildspeicher (12) einen digitalen Speicher (48) für die Farb- und/oder Helligkeitswerte der Bildpunkte aufweist, bei dem die Anzahl der vorhandenen Speicherplätze größer oder gleich der Zahl der erforderlichen Speicherplätze zum Speichern der Farb- und/oder Helligkeitswerte ist, multipliziert mit der Anzahl der maximal darstellbaren Bildpunkte, und daß die vorhandenen Speicherplätze mit der Farb- und/oder Helligkeitsinformation frei adressierbar sind.

7. Videosystem nach Anspruch 6, **dadurch gekennzeichnet, daß** der digitale Bildspeicher (12) eine Vorrangschaltung (52, 54, 55, 56, 58; 60, 64) aufweist, die bei zeitgleichem Adressieren für das Abspeichern und das Auslesen der Information in Speicherplätze und aus Speicherplätzen dem Adressieren für das Auslesen den Vorrang gibt, die Adresse zum Speichern sowie die zu speichernde Information zwischenspeichert und die zu speichernde Information erst nach der Beendigung des Auslesens im Speicher abgelegt.

8. Videosystem nach einem der vorhergehenden Ansprüche, **dadurch gekennzeichnet, daß** in die Bildaufbereitungseinrichtung (72, 74, 76, 78, 80) mehr als eine Zeile aus dem Bildspeicher (12) einlesbar ist, und daß die Farb- und/oder Helligkeitswerte der Bildpunkte der eingelesenen Zeilen zum Erzeugen der Bildpunkte einer Zeile zur Darstellung des Bildes analog gewichtet summierbar sind.

9. Videosystem nach einem der vorhergehenden Ansprüche, **dadurch gekennzeichnet, daß** in der Bildaufbereitungseinrichtung (62; 72, 74, 76, 78, 80) ein Tiefpaß-Filter (69) mit einer Grenzfrequenz vorhanden ist, die sich aus einem der vorgegebenen Faktor, multipliziert mit dem kleinsten Produkt aus Bildpunkt/Zeile mal Zeilenfrequenz, bezüglich beider Parametersätze ergibt.

10. Videosystem nach Anspruch 9, **dadurch gekennzeichnet, daß** hinter dem Tiefpaß-Filter eine Klemmschaltung (70) vorhanden ist.

11. Videosystem nach einem der Ansprüche 1 bis 10, **dadurch gekennzeichnet, daß** eine Schaltung zur Farbanpassung (14) für unterschiedliche Signaldefinition für Farb- und/oder Helligkeitswerte in den Parametersätzen für das Abspeichern und Auslesen vorhanden ist.

## Claims

1. Video system for presentation of a video picture which is made up of picture elements of which the colour and/or brightness values (R; G; B) can be stored sequentially according to a first set of parameters with predetermined parameter values for number of lines, number of picture elements, line frequency and picture frequency in a picture store (12) which can be read out according to a second set of parameters with other or the same parameter values for presentation of the stored video picture with a presentation device (16, 30, 32) containing a light source (16) which can be controlled according to the colour and/or brightness values (R₀, G₀, B₀) of the picture elements in order to generate a light beam (26) which can be projected via an optical unit (30) onto a screen (32), the optical unit (30) having a raster unit (36) which comprises a polygonal mirror (38) for line-by-line deflection of the light beam (26) and a pivoting mirror (40) for pictorial vertical deflection thereof and with which the light beam (26) can be guided onto raster points within a picture field predetermined for presentation of the video picture on the screen (32), raster control means (42) being provided for rastering of the light beam (26) according to the second set of parameters, the video system having a picture preparation unit (62; 72, 74, 76, 78, 80) which, when the number of picture elements and/or lines in the first set of parameters differs from the second set of parameters, interpolates the picture elements according to the second set of parameters from the brightness and/or colour values of the stored video picture, **characterised in that** for readout of the video picture the picture store (12) can be supplied with synchronisation pulses for the start of the line and/or of the picture from the raster control means (42) and that the synchronisation pulses are derived from the positions of the polygonal mirror (38) and of the pivoting mirror (40) detected by the raster control means (42).

2. Video system as claimed in Claim 1, **characterised in that** the synchronisation pulses can be generated inductively by way of magnets.

3. Video system as claimed in Claim 1, **characterised in that** the synchronisation pulses can be generated by determination of the time at which a light beam emitted by a measurement laser is reflected by a polygonal surface of the polygonal mirror (36).

4. Video system as claimed in Claim 1, **characterised in that** the synchronisation pulses can be generated by determination of the time at which a light beam emitted by the light source itself is reflected by a polygonal surface of the polygonal mirror (36).

5. Video system as claimed in one of Claims 1 to 4, **characterised in that** the synchronisation pulses of the raster control means (42) can be generated in terms of time before each start of a line predetermined by the raster control means (42) with a time interval predetermined by the maximum store running time and that a delay circuit (46) is provided for adaptation of the synchronisation signals to the current delay time.

6. Video system as claimed in one of Claims 1 to 4, **characterised in that** the picture store (12) has a digital store (48) for the colour and/or brightness values of the picture elements in which the number of available storage locations is greater than or equal to the number of necessary storage locations for storing the colour and/or brightness values, multiplied by the number of maximum picture elements which can be presented, and that the available storage locations are freely addressable with the colour and/or brightness data.

7. Video system as claimed in Claim 6, **characterised in that** the digital picture store (12) has a priority circuit (52, 54, 55, 56, 58; 60, 64) which with simultaneous addressing for the storage and the readout of the data in storage locations and from storage locations gives priority to the addressing for readout, buffers the address for storing as well as the data to be stored and does not put the data to be stored in the store after the readout has ended.

8. Video system as claimed in one of the preceding claims, **characterised in that** in the picture preparation unit (72, 74, 76, 78, 80) more than one line can be read in from the picture store (12), and that analog weighted summing of the colour and/or brightness values of the picture elements of the read-in lines is carried out in order to generate the picture elements of a line for presentation of the picture.

9. Video system as claimed in one of the preceding claims, **characterised in that** the picture preparation unit (62; 72, 74, 76, 78, 80) there is a low-pass filter (69) with a cutoff frequency which is produced from one of the predetermined factors, multiplied by the least product of picture element/line times line frequency, with regard to both sets of parameters.

10. Video system as claimed in Claim 9, **characterised in that** there is a clamping circuit (70) behind the low-pass filter.

11. Video system as claimed in one of Claims 1 to 10, **characterised in that** a circuit is provided for colour matching (14) for differing signal definition for colour and/or brightness values in the parameter sets for the storage and readout.

## Revendications

1. Système vidéo pour la représentation d'une image vidéo qui est constituée de points d'image, dont les valeurs de couleur et/ou de luminosité (R ; G ; B) peuvent être mémorisées dans une mémoire d'images (12), de manière séquentielle, selon un premier jeu de paramètres avec des valeurs de paramètre données pour le nombre de lignes, le nombre de points d'imagés, la fréquence de ligne et la fréquence d'image, laquelle mémoire d'images (12) peut être lue selon un deuxième jeu de paramètres avec d'autres valeurs de paramètre ou des valeurs identiques pour la représentation de l'image vidéo mémorisée, au moyen d'un dispositif de représentation (16, 30, 32), qui contient une source de lumière (16), commandable selon les valeurs de couleur et/ou de luminosité (R₀, G₀, B₀) des points d'image, pour produire un faisceau de lumière (26) qui peut être projeté, au moyen d'une optique (30), sur un écran (32), l'optique (30) comportant un dispositif de balayage (36), qui comprend un miroir polygonal (38), pour la déviation ligne par ligne du faisceau lumineux (26) ainsi qu'un miroir pivotant (40) pour sa déviation verticale en fonction de l'image, et au moyen duquel le faisceau lumineux (26) peut être dirigé sur des points de balayage sur l'écran (32), à l'intérieur d'un champ d'image donné pour la représentation de l'image vidéo, et une commande de balayage (42) étant prévue pour le balayage du faisceau lumineux (26) selon le deuxième jeu de paramètres, l'image vidéo comportant un dispositif de traitement d'images (62 ; 72, 74, 76, 78, 80) qui, dans le cas où le nombre de points d'image et/ou le nombre de lignes dans le premier jeu de paramètres est différent du deuxième jeu de paramètres, interpole les points d'image selon le deuxième jeu de paramètres à partir des valeurs de luminosité et/ou de couleur de l'image vidéo mémorisée, **caractérisé en ce que** la mémoire d'images (12) peut recevoir, pour l'extraction de l'image vidéo, des impulsions de synchronisation pour le début des lignes et/ou le début d'image, depuis la commande de balayage (42) et **en ce que** les impulsions de synchronisation sont dérivées des positions du miroir polygonal (38) et du miroir pivotant (40), détectées par la commande de balayage (42).

2. Système vidéo selon la revendication 1, **caractérisé en ce que** les impulsions de synchronisation peuvent être produites de manière inductive par l'intermédiaire d'aimants.

3. Système vidéo selon la revendication 1, **caractérisé en ce que** les impulsions de synchronisation peuvent être produites par détermination de l'instant auquel un faisceau lumineux, émis par un laser de mesure, est réfléchi par une surface polygonale du miroir polygonal (36).

4. Système vidéo selon la revendication 1, **caractérisé en ce que** les impulsions de synchronisation peuvent être produites par détermination de l'instant auquel un faisceau lumineux, émis par la source lumineuse elle-même, est réfléchi par une surface polygonale du miroir polygonal (36).

5. Système vidéo selon l'une des revendications 1 à 4, **caractérisé en ce que** les impulsions de synchronisation de la commande de balayage (42) peuvent être produites avec un intervalle de temps, donné par les durées maximales de mémoire, avant chaque début de ligne donné par la commande de balayage (42), et **en ce qu'**il est prévu un circuit de temporisation (46) pour l'adaptation des signaux de synchronisation à la durée actuelle de la temporisation.

6. Système vidéo selon l'une des revendications 1 à 4, **caractérisé en ce que** la mémoire d'images (12) comporte une mémoire numérique (48) pour les valeurs de couleur et/ou de luminosité des points d'image, pour laquelle le nombre d'emplacements de mémoire existant est supérieur ou égal au nombre d'emplacements de mémoire nécessaires pour la mémorisation des valeurs de couleur et/ou de luminosité, multiplié par le nombre de points d'image pouvant être représentés au maximum, et **en ce que** les emplacements de mémoire existants peuvent être librement adressés avec l'information de couleur et/ou de luminosité.

7. Système vidéo selon la revendication 6, **caractérisé en ce que** la mémoire d'images numérique (12) comporte un circuit de priorité (52, 54, 55, 56, 58 ; 60, 64) qui, en cas d'adressage simultané pour la mémorisation et l'extraction de l'information dans des emplacements de mémoire et à partir d'emplacements de mémoire, donne la priorité à l'adressage pour l'extraction, l'adresse pour la mémorisation ainsi que celle de l'information à mémoriser étant mémorisées de manière intermédiaire et l'information à mémoriser n'étant stockée dans la mémoire qu'à l'achèvement de l'extraction.

8. Système vidéo selon l'une des revendications précédentes, **caractérisé en ce que** dans le dispositif de traitement d'image (72, 74, 76, 78, 80) peuvent être mémorisées plus d'une ligne de la mémoire d'images (12) et **en ce que** les valeurs de couleur et/ou de luminosité des points d'image des lignes mémorisées peuvent être additionnées de manière pondérée et analogique, pour produire les points d'image d'une ligne, en vue de la représentation de l'image.

9. Système vidéo selon l'une des revendications précédentes, **caractérisé en ce que** dans le dispositif de traitement d'image (62 ; 72, 74, 76, 78, 80) se trouve un filtre passe-bas (69) avec une fréquence limite qui résulte de l'un des facteurs donnés, multiplié par le plus petit produit de points d'image/ligne par la fréquence de ligne, pour les deux jeux de paramètres.

10. Système vidéo selon la revendication 9, **caractérisé en ce qu'**un circuit de blocage (70) est prévu derrière le filtre passe-bas.

11. Système vidéo selon l'une des revendications 1 à 10, **caractérisé en ce qu'**un circuit d'adaptation de couleur (14) pour une définition différente du signal pour les valeurs de couleur et/ou de luminosité est prévu dans les jeux de paramètres de mémorisation et d'extraction.
